# EUROPEAN PATENT APPLICATION

(11) **EP 1 862 948 A1**
(43) Date of publication of application: **05.12.2007**
(21) Application number: 06300551.6
(22) Date of filing: 01.06.2006
(51) Int. Cl.: G06K 19/07, H04Q 7/32

(54) **IC card with OTP client**

(71) Applicant: Axalto SA, 92197 Meudon Cedex (FR)
(72) Inventor: Voyron, François Axalto S.A. I.P.D., 92190 Meudon (FR)

(57) **Abstract**

The invention relates to an OTP token consisting of an IC card 10, in particular a smart card emulating a SIM card, and comprising an OTP application 11. The IC card relies on a communication device 20 such as a regular cellular phone, which displays the OTP generated by the IC card 10.

## Description

The invention relates to One Time Password tokens, a.k.a OTP tokens. OTP has been introduced in order to overcome the limitations of passwords (sometimes referred to as static passwords), as explained in particular in Wikipedia (an online encyclopedia) and summarized below.

A password is a form of secret authentication data that is used to control access to a resource. Passwords are kept secret from those not allowed access, and those wishing to gain access are tested on whether or not they know the password and are granted or denied access accordingly. Passwords have a number of drawbacks. In particular, they are either hard to remember for the user, or easy to guess by third parties (in particular hackers). Many authentication protocols relying on passwords transmit the password in clear text, which poses a security threat (the password can be intercepted). In addition, passwords are usually prone to so-called "replay attack", in which once the password has been intercepted or guessed, the hacker willing to impersonate the password owner simply submits the stolen password when requested by the attacked system.

Several improvements have been devised in order to overcome the limitations of passwords, including PKI (public key cryptography) based authentication, and one time passwords.

OTPs are passwords which are valid only once. OTPs typically rely on complex calculation, which a typical user is unable to perform mentally. At least two types of OTPs are in widespread use. The first type uses a mathematical algorithm to generate a new password based on the previous. A simple implementation of the first type consists in printing a list of OTPs and giving it to the user. This may be prone to phishing attacks. Another implementation type is based on time-synchronization between the authentication server (OTP server) and the client providing the password (OTP client), and typically derives the password from the current time. To this end, a piece of software for computing OTPs is installed on the user's device (PC, PDA, etc.). It is also possible to mix both types, i.e. to derive the next password from the previous and from the current time (and possibly other parameters). OTPs have a number of constraints (such as synchronization between the OTP server and the OTP client), which are now well understood by those skilled in the art.

Another improvement over regular passwords has been the introduction of multiple-factor authentication. In a multiple-factor authentication protocol, multiple independent ways to establish identity and privileges are required. This contrasts with traditional password authentication, which requires only one factor (knowledge of a password) in order to gain access to a system. Common implementations of two-factor authentication use 'something you know' as one of the two factors, and use either 'something you have' or 'something you are' as the other factor. Using more than one factor of authentication is also called strong authentication; using just one factor, for example just a password, is considered by some weak authentication. A common example of two-factor authentication is based on the use of a bank card. The card itself is the physical item, and the personal identification number (PIN) is the data that goes with it. The three most commonly recognized factors are:
- 'Something you know', such as a password or PIN
- 'Something you have', such as a credit card or hardware token
- 'Something you are', such as a fingerprint, a retinal pattern, or other biometric.

Other, less common factors may include:
- location-based authentication, such as only allowing a particular atm, charge, or credit card to be used at a specific merchant or at a specific bank branch, or only allowing root access from specific terminals
- time-based authentication, such as only allowing access from certain accounts during normal working hours
- size-based authorization, such as only allowing a specific transaction to be for a specific exact amount
- pre-authorized transactions, such as where a company uploads all of the check numbers and amounts written for each check to their bank, and the bank would then reject any check not of those numbers and amounts as fraudulent

Multiple-factor authentication and OTP may be combined. For example, it is possible to implement OTP in a hardware token. Access to the token may be protected (e.g. by a password, by a PIN code, by a fingerprint recognition or by other techniques) in order to prevent a thief (or anybody finding a lost OTP token) from using the OTP token. OTP tokens are in widespread use. Two types of OTP tokens are of particular interest in the context of the invention.

A first type of OTP token consists of smart cards in which an OTP client has been loaded (typically in the form of a software application). This first type of OTP token is generally simple (it may simply consist of a properly programmed chip embedded in a plastic card body). However, use of such an OTP token requires another device, in order for the user to access the OTP that has been generated and transmit it to the relevant OTP server (for example by typing it in a window), or for the OTP server to access the OTP application directly on the smart card on the user's behalf. OTP smart cards are therefore associated with infrastructure problems. For example, in order to use an OTP smart card on a PC, one needs to have a smart card reader (or smart card connector) connected to the PC, and to install some software (e.g. Axalto Protiva™ software) on the PC in order to interact with the OTP smart card. Another example of OTP smart cards consists of SIM cards in which the network operator has loaded an OTP client application. Such OTP SIM cards are under the control of the operator, since they contain the operator key set required for connecting to the operator network. As known in the art, network operators (in particular GSM, UMTS or GPRS operators) do not normally share their keys with other organizations, as their keys are critical for the security of their network and for their revenue (billing etc.). They do not even trust cellular phones manufacturers and typically use SIM / USIM cards (which are tamperproof security devices) in order to store their keys.

A second type of OTP tokens consists of electronic devices comprising processing means for computing the OTP, output means such as an LCD (liquid crystal display) or audio speaker, and a battery. Such OTP tokens may further comprise communication means (such as Bluetooth), which may be useful in order to synchronize the OTP token with the OTP server, and input means (such as a keypad or fingerprint scanner), which allow the OTP token to authenticate its legitimate owner (and may also be used for the synchronization, e.g. by typing the current date and time). The OTP token typically outputs the OTP on the output means (either continuously or only when the correct user authentication occurred), and let the user submit the OTP to the OTP server. This second type of OTP tokens is convenient as it typically requires no interface device (in order to communicate with the OTP server), but on the other hand it is typically quite complex, bulky (much bigger than a smart card) and expensive. It also requires the battery to be replaced from time to time.

One technical problem associated with state of the art OTP token is therefore how to design an OTP token which is simple and requires no infrastructure change (such as software and hardware installation). An OTP token according to a preferred embodiment of the invention consists of an IC card (in particular a smart card emulating a SIM card) comprising an OTP application. The IC card relies on a communication device such as a regular cellular phone, which displays the OTP generated by the IC card.

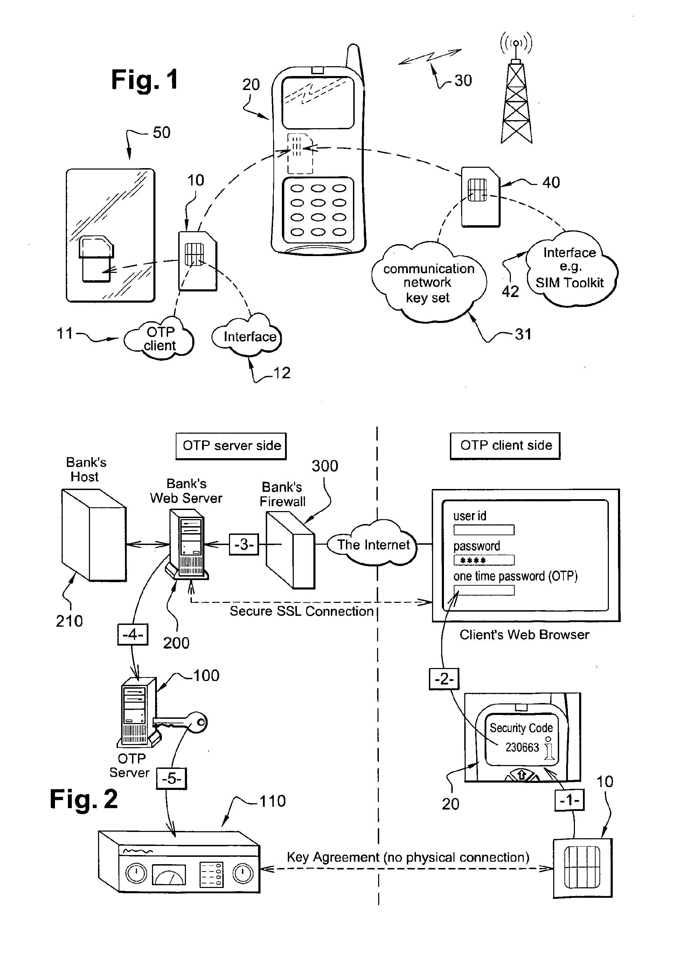

The invention and its advantages will be explained more in details in the following specification referring to the appended drawing, in which Error! Reference source not found. depicts an IC card according to the invention, communicating with a communication device, and Error! Reference source not found. depicts the OTP architecture (client and server).

An IC card 10 according to a preferred embodiment of the invention depicted on Error! Reference source not found. comprises an OTP client 11 I and an interface 12 for communicating with a communication device 20. The communication device 20 is able to connect to a communication network 30 if it successfully authenticates using a communication network key set 31 stored in a second IC card 40. The second IC card 40 comprises an interface 42 for communicating with the communication device 20. The first IC card 10 does not contain a communication network key set, and its interface 12 is compatible with the interface 42 of the second IC card 40.

As known in the art, two interfaces are compatible when they can be substituted in a transparent manner, without requiring any adaptation of the system in which they are substituted. In the present case, the interface 12 enables access to the OTP client 11 from the communication device 20 through features of the communication device already available for managing the second IC card 40. In other words, the first IC card interface 12 emulates the second IC card interface 42.

The IC card 10 of the invention is advantageous, in particular because of its ability to communicate with the communication device 20 without adaptation of the communication device (no need to load specific software, to add hardware, etc.). The communication device 20 is able to communicate with the second IC card 40 as this is required for the communication device 20 to connect to a communication network 30. Therefore the communication device 20 can also communicate with the first IC card 10 of the invention, which has a compatible interface.

The first IC card 10 is also advantageous compared to a SIM card containing an OTP client. Indeed, a user may benefit from the first IC card 10 regardless of whether the user's mobile network operator supports OTP. Currently very few operators offer this OTP services. In addition, the first IC card 10 OTP scope of use is not determined by the mobile network operator and may offer support for certain resources which the user would like to authenticate to and which are not even known to the operator. This contrasts with OTP SIM cards which can be expected to support at least some of the mobile network operator's applications, but not necessarily third parties applications. Another limitation of OTP SIM cards lies in the fact that they are typically under the operator's control. Therefore the operator as well as any person or entity controlling the operator or able to access the operator's relevant equipments might potentially access the user's OTP protected resources. The user may be reluctant in using such OTP SIM card, for example in non-democratic countries where governments may have access to the operators facilities and access the user's resources at will in order to identify those citizens who disagree with the regime.

The IC card can communicate with the communication device using a number of low-level protocols, including contact-less protocols such as ISO 14443, or contact protocols such as ISO 7816, USB, SD or MMC. The interface 12 is preferably independent of the low-level protocols used by the IC card.

The IC card 10 is advantageous compared to known OTP smart cards used in personal computers, in that it does not require a specific equipment or software (no specific smart card reader to connect to a PC, no middleware installation on a PC, etc.). The IC card 10 reuses an existing communication device of the user, such as a mobile phone. The IC card 10 is also advantageous compared to OTP SIM cards as it is independent of the communication network operator and can be issued and personalized by any entity, such as banks administrating an OTP server, without having to interfere in any way with network operators.

The IC card 10 may be used in a system where the communication network 30 is a cellular network. Cellular network operators typically offer a new cellular phone for a negligible amount after the subscriber has been with the operator for a certain period of time, therefore many people have spare cellular phones, which they can reuse for the invention. Such spare cellular phones are typically not able to make calls any longer (having no communication with an IC card that would authenticate them to any cellular network). In the context of the invention, such spare cellular phones typically only serve as OTP tokens, but there are some exceptions. For example, the spare cellular phone may have a WiFi phone capability (e.g. via a TOIP solution such as Skype^{TM}), requiring no authentication, in which case the cellular phone is still usable for telephony over IP over WiFi. It is also possible to have a cellular phone with multi channel capability, i.e. a phone able to communicate with multiple IC cards at the same time. For example, two or more IC card slots may be available and addressable at the same time, or a contact-less reader may support multiple simultaneous contact-less IC cards communications, including a first OTP IC card according to the invention and a second network authentication IC card such as a contact-less SIM card. Alternatively a user may decide to use his current cellular phone rather than a spare cellular phone. If the current cellular phone has a multi channel capability, the user can use both the first OTP IC card 10 according to the invention and the second network authentication IC card 40 simultaneously. Otherwise, the user has to use the two IC cards alternatively, which may force him to swap the IC cards. For example, by default the second (network authentication) IC card 40 can be in communication with the cellular phone in order to be able to make and receive calls at any time. But when the user needs to authenticate to an OTP server, he can remove the second IC card 40 (if it's inserted in the cellular phone), and replace it with the first (OTP) IC card 10. The second IC card 40 may then be put in place just after successful OTP authentication. In order to carry the first (OTP) IC card 10 when it's not inserted in the cellular phone 20, it may be advantageous to use a slide-in adapter 50 well known in the art. Such adapter typically has the shape of a regular bankcard and comprises a slot in which a smart card having a SIM card form factor can be inserted. Such adapter 50 is convenient for keeping the first IC card 10 in a wallet without losing it. It also permits the introduction of the IC card both in a plug-in connector (small SIM card form factor) when not using the adapter and in a regular smart card reader when using the adapter.

The IC card 10 can be for example an ISO 7816 smart card, a USB smart card, or a secure MMC.

Examples of smart cards include SIM cards, where SIM stands for Subscriber Identity Module. For the sake of simplicity, the term SIM covers variants such as USIM used in 3G networks.

When the first IC card 10 is a SIM card, it is advantageous for the interface 12 to comprise a SIM Toolkit interface. Indeed, with the SIM toolkit technology, it is possible in particular to create a menu automatically displayed by the communication device in which the SIM toolkit compliant IC card is inserted. For example, if the first IC card 10 is issued by a bank, a menu containing the bank's name can be displayed, and by selecting this menu the user can start the OTP client. The menu and the interaction with the user are managed by the communication device 20, but the communication device 20 acts on behalf of the first IC card 10. The communication device merely does what it is asked to do by the IC card, and does not need to be loaded with any application.

A typical use case of the IC card 10 is as follows. The example concerns a user who's traveling in a remote country, and who just paid for a few minutes of Internet connection in an Internet café. The user would like to perform sensitive operations such as bank transfer associated with an expensive souvenir he just bought, and does not want to type a regular password on an Internet cafe PC as such PC can be loaded with key loggers or other phishing tools.
- in a first step, the user removes the second IC card 40 from the communication device 20 (if needed)
- in a second step, the user inserts the first IC card 10 into the communication device 20 (if not already inserted or otherwise connected)
- in a third step, the user powers up the communication device 20 (if not already powered up)
- in a fourth step, the user enters the relevant menu or otherwise activates the OTP client 11, as proposed by the communication device 20 based on the instructions of the interface 12 (such as SIM toolkit instructions)
- in a fifth step, the user authenticates (e.g. with a PIN code), if the IC card 10 is programmed so as not to output OTPs unless a legitimate user has successfully authenticated
- In a sixth step, the first IC card 10 displays the OTP on the communication device 20 display, or otherwise outputs the OTP (e.g. voice synthesis, etc.), thanks to the interface 12
- In a seventh step, the user enters the OTP in the system, e.g. he can type the OTP from the keyboard of an Internet café's PC into a window open in the Internet browser of the PC
- In an eighth step, the Internet café's PC sends the OTP to the OTP server, which authenticates the user and delivers the requested service.

It is also possible, in a preferred embodiment, to have an IC card 10 wherein the interface 12 comprises a web interface for communicating with an Internet browser, the OTP client 11 being accessible in the form of a web page. It may be preferable to secure the communication with the OTP client using a security protocol such as SSL / TLS. This web interface may complement other interfaces such as the above-mentioned SIM toolkit interface. If a communication device is able to manage the web interface without adaptation, the web interface represents an interesting alternative to the SIM toolkit interface in the sense that the web interface is typically similar on all communication devices, while the SIM toolkit interface may vary from communication device to communication device. Therefore the user can use the first IC card 10 on multiple communication devices supporting web interfaces without significant differences in the graphical user interfaces, which is simpler.

The first IC card interface 12 may comprise different interfaces for communicating with different types of devices. For example the IC card 10 may be conveniently carried in a cellular phone when traveling, but it might be preferable to plug it back to a Personal Computer when back home, as the Personal Computer may be equipped with more elaborate software taking better advantage of the first IC card 10 features. The interfaces for different types of devices can be different, for example a personal computer does not typically support SIM toolkit, but may support the IC card 10 through interfaces such as PKCS#11 or PC/SC CSPs.

The first IC card 10 can be a multi-application IC card comprising applications other than the OTP client 11. For example, the first IC card 10 can comprise banking applications, or network security applications (such as applets for PGP support) allowing the encryption and signature of e-mails using a cryptographic engine of the first IC card 10.

There may also be different OTP clients on a single first IC card 10, as there may be different standards for OTPs. Typical fields of use of first IC cards 10 include E-Banking and E-Commerce. In the field of E-Banking, the first IC card 10 may provide in particular OTP authentication, challenge response, or signature services. As known in the art, challenge response consists in sending a challenge (typically a random number generated by a server requesting authentication) to an entity, and having the entity sign the challenge (in order to produce the response expected by the server) with a key agreed with the server in order to authenticate the entity. In the context of the invention, the user may type the challenge sent by the server requesting the authentication through the keypad of a cellular phone in which the first IC card 10 is inserted, read the response on the LCD of the cellular phone and transmit it to the server (e.g. by typing it in a web form). Signature services are often based on the BIN number of a credit card (the first IC card 10 may comprise a credit card application). In the field of E-Commerce, the first IC card 10 may provide in particular services comprising OTP authentication based on 3DSecure, OTP authentication not based on 3DSecure, or signature based on 3DSecure. 3DSecure is a protocol developed by major players in the credit card payments business and endorsed in particular by Visa and Mastercard. Its purpose is to provide a higher level of security.

During the personalization and issuing of a set of first IC cards 10 with an OTP client (which typically could be an OTP java applet), it is preferable to assign a different and unique key to each first IC card 10, the assignment being performed in a secure manner. The keys of the first IC cards 10 should match the OTP server keys which are preferably stored in a Hardware Security Module. This is preferably done in accordance with established standards such as ANSI X9.24.

Error! Reference source not found depicts a possible OTP architecture for preferred embodiments of the invention and shows the information flow associated with an OTP authentication, from generation of an OTP in a first IC card 10 to the verification of the OTP by the OTP server 100, preferably inside an HSM 110 associated with the OTP server 100. An HSM (hardware security module, sometimes referred to as host security module) is a well-known device which is able to manage cryptographic material (such as keys) more securely than a regular server.
- An OTP-SIM applet located in a smart card 10 generates the secure "One Time Password" using at least one secure cryptographic key located inside the smart card and displays it on the screen of a cellular phone 20
- The user types the displayed "One Time Password" in the relevant web authentication form of an HTML page generated by a web site based in a web server 200 requesting OTP authentication. The web server 200 typically communicates with a bank host 210, and is typically protected by a bank firewall 300
- The authentication data filled by the user (including the "one time password") is encrypted and sent securely to the bank's web server 200, via SSL
- The bank's web server 200 sends the one time password and client ID to the relevant OTP server 100 for online authentication
- The OTP server 100 verifies the authentication data using the HSM 110

The connection between the client's web browser and the bank's web server 200 is preferably secured, for example via SSL.

The OTP server 100 can be for example a web-services based Server built upon a well established online transaction processing financial open source library such as the one available at http://jpos.org, which interfaces with industry leading HSMs, and which is known to be very reliable and to offer high performances.

The capacity required for typical OTP applications is as follows. For an application involving around 10,000,000 connections per month, it has been established that the system should withstand approximately 10 TPS (transactions per second) at peak hours, and 3 TPS outside peak hours. In general, there are around 6 peak hours per day. This has been studied in particular by the Standish group - C.F. www.standishgroup.com.

State of the art HSMs are typically able to handle 200TPS and more, therefore they are sufficient. The above mentioned open source OTP server software is a high performance server which exceeds the 10TPS requirement even when deployed on a basic entry-level server hardware.

## Claims

1. IC card (10) comprising an OTP client (11) and an interface (12) for communicating with a communication device (20), the communication device (20) being able to connect to a communication network (30) if it successfully authenticates using a communication network key set (31) stored in a second IC card (40), the second IC card (40) comprising an interface (42) for communicating with the communication device (20), the first IC card (10) being **characterized in that** it does not contain a communication network key set, and **in that** the interface (12) of the first IC card (10) is compatible with the interface (42) of the second IC card (40).

2. IC card (10) according to claim 1, wherein the communication network (30) is a cellular network.

3. IC card (10) according to any previous claim, wherein the IC card (10) is an ISO 7816 smart card, a USB smart card, or a secure MMC.

4. SIM card (10) according to claim 3 wherein the interface (12) comprises a SIM Toolkit interface.

5. IC card (10) according to any previous claim, wherein the interface (12) comprises a web interface for communicating with an Internet browser, the OTP client (11) being accessible in the form of a web page.

6. IC card (10) according to any previous claim, wherein the interface (12) comprises different interfaces for communicating with different types of devices.

7. IC card (10) according to any previous claim, wherein the IC card (10) is a multi-application IC card comprising applications other than the OTP client (11).
